# EUROPEAN PATENT SPECIFICATION

(11) **EP 3 901 412 B1**
(45) Date of publication and mention of the grant of the patent: **31.05.2023**
(21) Application number: 21167039.3
(22) Date of filing: 06.04.2021
(51) Int. Cl.: F01D 5/16, F01D 5/22, F01D 5/14

(54) **SNUBBER SHROUD CONFIGURATIONS**
UMMANTELUNGSSKONFIGURATIONEN MIT DÄMPFERN
CONFIGURATIONS D'ENVELOPPE D'AMORTISSEUR

(30) Priority: 16.04.2020 US 202016850651
(43) Date of publication of application: 27.10.2021
(73) Proprietor: General Electric Company, Schenectady, NY 12345 (US)
(72) Inventor: RISTAU, Neil Devin, Greenville, SC 29615 (US); WONDRASEK, Michael Anthony, Greenville, SC 29615 (US)
(74) Representative: Novagraaf Group

(56) References cited:
- WO-A1-97/40261
- GB-A- 2 033 022
- US-A- 4 919 593
- US-A- 5 257 908
- US-A1- 2014 234 110
- US-A1- 2018 216 469

## Description

### BACKGROUND OF THE INVENTION

The present invention relates generally to apparatus, methods and/or systems concerning turbine rotor blades. More specifically, but not by way of limitation, the present invention relates to apparatus and assemblies pertaining to turbine rotor blades having multiple snubber shrouds.

US4919593A relates to retrofitted rotor blades for steam turbines and a method of making the same. The turbine blades are lashed together using wires.

US2018216469A1 relates to a turbomachine rotor blade having particle-filled dampers positioned within mid-span shrouds.

GB2033022A relates to a turbomachinery blade having mid-span shrouds or snubbers.

US2014234110A1 relates to a turbine blade tip shroud and mid-span snubber with compound contact angle.

US5257908A relates to a turbine lashing structure. Lugs at different blade height are bonded to the blades for connection of the blades in groups. The bonded lugs are building two rows parallel to each other.

WO9740261A1 relates to an aerodynamically optimized mid-span snubber for combustion turbine blade.

### BRIEF DESCRIPTION OF THE INVENTION

In one aspect the invention relates to a blade according to claim 1. The embodiments set forth relate to a blade for use in a turbine.

A blade includes an airfoil including a platform, a concave pressure sidewall and a convex suction sidewall extending axially between corresponding leading and trailing edges and radially between a root and an outboard tip. The blade further includes an angled outboard snubber shroud positioned on the airfoil, the angled outboard snubber shroud being provided at an angle α defined from a camber on the angled outboard snubber shroud and the platform of the blade; an angled inboard snubber shroud positioned on the airfoil, the angled inboard snubber shroud being provided at an angle φ defined from a camber on the angled inboard snubber shroud and the platform of the blade. The angle α is independently set with respect to angle φ.

The present invention in a further aspect relates to a gas turbine engine having a turbine that includes a row of circumferentially spaced blades according to claim 11.

Each of the blades may include an airfoil including a platform, concave pressure sidewall and a convex suction sidewall extending axially between corresponding leading and trailing edges and radially between a root and an outboard tip. The blade further includes an angled outboard snubber shroud positioned on the airfoil, the angled outboard snubber shroud being provided at an angle α defined from a camber on the angled outboard snubber shroud and the platform of the blade; an angled inboard snubber shroud positioned on the airfoil, the angled inboard snubber shroud being provided at an angle φ defined from a camber on the angled inboard snubber shroud and the platform of the blade. The angle α is independently set with respect to angle φ.

These and other features of the present invention will become apparent upon review of the following detailed description of the preferred embodiments when taken in conjunction with the drawings and the appended claims.

The illustrative aspects of the present disclosure are designed to solve the problems herein described and/or other problems not discussed.

### BRIEF DESCRIPTION OF THE DRAWINGS

These and other features of this embodiments will be more completely understood and appreciated by careful study of the following more detailed description of exemplary embodiments taken in conjunction with the accompanying drawings, in which:
Figure 1 is a schematic representation of an illustrative combustion turbine engine in which embodiments of the present invention may be used;
Figure 2 is a side view of an illustrative turbine rotor blade and stationary shroud assembly in which the rotor blade includes dual snubbers that are independently set with respect to each other according to an embodiment of the present disclosure; and
Figure 3 is a perspective view of the outboard portion of the airfoil of Figure 2.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

While the following examples of the present embodiments may be described in reference to particular types of turbine engine, those of ordinary skill in the art will appreciate that the present embodiments may not be limited to such use and applicable to other types of turbine engines, unless specifically limited therefrom. Further, it will be appreciated that in describing the present embodiments, certain terminology may be used to refer to certain machine components within the gas turbine engine. Whenever possible, common industry terminology will be used and employed in a manner consistent with its accepted meaning. However, such terminology should not be narrowly construed, as those of ordinary skill in the art will appreciate that often a particular machine component may be referred to using differing terminology. Additionally, what may be described herein as being single component may be referenced in another context as consisting of multiple components, or, what may be described herein as including multiple components may be referred to elsewhere as a single one. As such, in understanding the scope of the present embodiments, attention should not only be paid to the particular terminology, but also the accompanying description, context, as well as the structure, configuration, function, and/or usage of the component, particularly as may be provided in the appended claims.

Several descriptive terms may be used regularly herein, and it may be helpful to define these terms at the onset of this section. Accordingly, these terms and their definitions, unless stated otherwise, are as follows. As used herein, "downstream" and "upstream" are terms that indicate direction relative to the flow of a fluid, such as, for example, the working fluid through the compressor, combustor and turbine sections of the gas turbine, or the flow coolant through one of the component systems of the engine. The term "downstream" corresponds to the direction of fluid flow, while the term "upstream" refers to the direction opposite or against the direction of fluid flow. The terms "forward" and "aft", without any further specificity, refer to directions relative to the orientation of the gas turbine, with "forward" referring to the forward or compressor end of the engine, and "aft" referring to the aft or turbine end of the engine. Additionally, given a gas turbine engine's configuration about a central axis as well as this same type of configuration in some component systems, terms describing position relative to an axis likely will be used. In this regard, it will be appreciated that the term "radial" refers to movement or position perpendicular to an axis. Related to this, it may be required to describe relative distance from the central axis. In this case, for example, if a first component resides closer to the center axis than a second component, it will be stated herein that the first component is "radially inward" or "inboard" of the second component. If, on the other hand, the first component resides further from the axis than the second component, it may be stated herein that the first component is "radially outward" or "outboard" of the second component. Additionally, it will be appreciated that the term "axial" refers to movement or position parallel to an axis. And, finally, the term "circumferential" refers to movement or position around an axis.

In a combustion turbine engine, air pressurized in a compressor is used to combust a fuel in a combustor to generate a flow of hot combustion gases, whereupon such gases flow downstream through one or more turbines so that energy can be extracted therefrom. In accordance with such a turbine, generally, rows of circumferentially spaced blades extend radially outwardly from a supporting rotor disc. Each blade typically includes a blade mount, e.g., a dovetail, that permits assembly and disassembly of the blade in a corresponding slot in the rotor disc, as well as an airfoil that extends radially outwardly from the blade mount and interacts with the flow of the working fluid through the engine. The airfoil has a concave pressure side and convex suction side extending axially between corresponding leading and trailing edges, and radially between a root and a tip. It will be understood that the blade tip is spaced closely to a radially outer stationary surface for reducing leakage therebetween of the combustion gases flowing downstream between the turbine blades.

Shrouds at the tip of the airfoil or "tip shrouds" on aft stages or rotor blades provide a point of contact at the tip, manage bucket frequencies, enable a damping source (i.e., by connecting the tips of neighboring rotor blades), and reduce the over-tip leakage of the working fluid. Given the length of the rotor blades in the aft stages, the damping function of the tip shrouds provides a significant benefit to durability. However, taking full advantage of the benefits is difficult considering the weight that the tip shroud adds to the assembly and the other configuration criteria, which include enduring hours of operation exposed to high temperatures and extreme mechanical loads. Thus, while large tip shrouds are desirable because of the effective manner in which they seal the gas path and robust connection they may form between neighboring blades, large tip shrouds may not be ideal because of the increased pull loads on the disc, particularly at the base of the airfoil because it must support the entire load of blade.

Another consideration is that the output and efficiency of gas turbine engines improve as the size of the engine and, and more specifically, the amount of air able to pass through it increase. The size of the engine, however, may be limited by the operable length of the turbine blades, with longer turbine blades enabling enlargement of the flow path through the engine. Longer blades, though, incur increased mechanical loads, which may place further demands on the blades and the disc that holds them. Longer blades also decrease the natural vibrational frequencies of the blades during operation, which increases the vibratory response of the blades. This additional vibratory load places even greater demands on blade configuration, which may limit life of the component and, in some cases, may cause vibratory loads in the turbine engine. One way to address the vibratory load of longer blades is through the use of shrouds that connect adjacent blades to each other.

One way to modify a blade in light of loads thereon is to position a shroud lower on the airfoil of the blade. That is, instead of adding the shroud to the tip of the blade, the shroud is positioned near the middle radial portion of the airfoil. As used herein, such a shroud will be referred to as a "snubber shroud." At this lower (or more inboard) radius, the mass of the shroud causes a reduced level of stress to the blade. However, this type of shroud may leave a portion of the airfoil of the blade unrestrained (i.e., that portion of the airfoil that extends outboard of the snubber shroud). This cantilevered portion of the airfoil can result in lower frequency vibration and increased vibratory loads. Accordingly, a blade configuration that reduces or limits loads would have value.

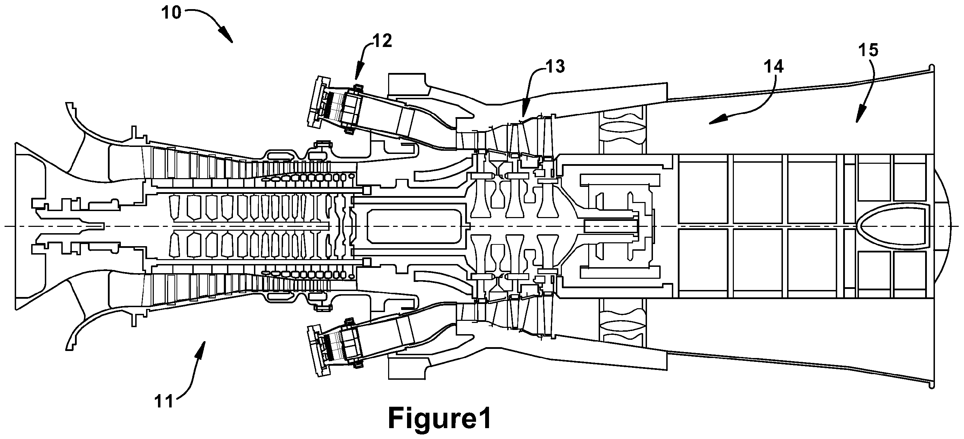

Figure 1 illustrates an illustrative combustion turbine engine in which embodiments of the present application may be used. It will be understood by those skill in the art that the present embodiments are not limited to this type of usage. As stated, the present embodiments may be used in combustion turbine engines, such as the engines used in power generation and airplanes, steam turbine engines, and other type of rotary engines. Figure 1 is a schematic representation of a combustion turbine engine 10. In general, combustion turbine engines operate by extracting energy from a pressurized flow of hot gas produced by the combustion of a fuel in a stream of compressed air. As illustrated in Figure 1, combustion turbine engine 10 may be configured with an axial compressor 11 that is mechanically coupled by a common shaft or to a downstream turbine section or turbine 13, and a combustor 12 positioned between compressor 11 and turbine 12. A diffuser 14 may be provided at a transition area between turbine 12 exhaust and an exhaust system 15. Diffuser 14 directs exhaust gas flow from turbine 12 through a flow path to exhaust system 15. It is desirable to have the flow in the diffuser 14 (sometimes referred to as diffuser profile) as turbulent free to reduce shock (or balance shock), vibrations, and enhance efficiency of the turbine engine 10.

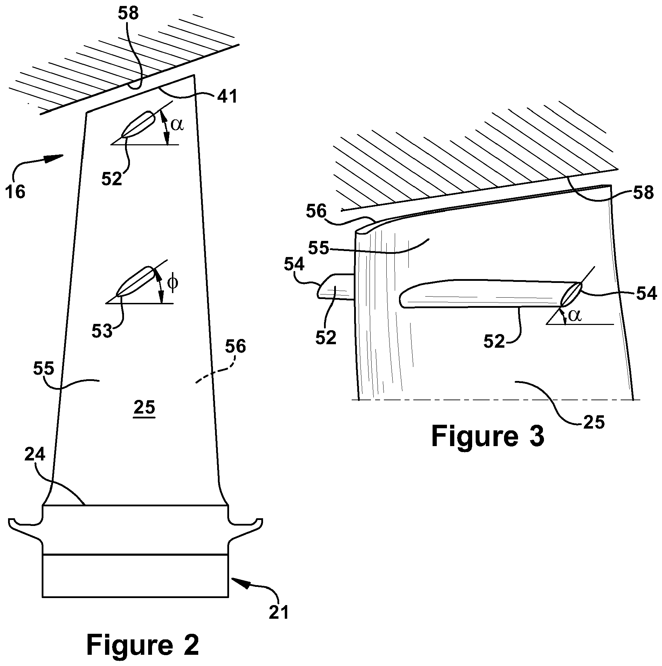

Figures 2 and 3 illustrate a side view and a perspective view, respectively, of an illustrative turbine blade 16 which includes snubber shrouds 52 and 53, in accordance with the present embodiments. Snubber shrouds 52 and 53 are capable of linking to and connecting to adjacent blades 16 at complementary snubber structures. The linking of adjacent blades 16 may occur between a snubber shroud-to-snubber shroud interface 54 at which a pressure side surface 55 of the airfoil and a suction side surface face 56 of the airfoil (opposite side of the airfoil 25 in Figure 2) contact each other. The snubber shroud-to-snubber shroud interfaces illustrated herein are schematic and not illustrated in any particular configuration. The illustrated snubber shroud-to-snubber shroud interfaces are merely illustrative and not intended to limit the embodiments in any manner. The linking of blades in this manner may tend to increase the natural frequency of the assembly and damp operational vibrations, which means blades 16 are subject to less mechanical stress during operation and may degrade slowly, if they undergo stress and/or degrade at all.

Figures 2 and 3 illustrate aspects of the present embodiments. As illustrated in Figure 2, the present embodiments describes a blade 16 with an airfoil 25 having dual snubber shrouds, an outboard snubber shroud 52 and an inboard snubber shroud 53. The airfoil 25 extends from a root 21, where the platform 24 is essentially a planar platform with a fillet (not illustrated transitioning from the base 21 to the airfoil 25). Each of outboard snubber shroud 52 and inboard snubber shroud 53 are provided on the blade 16 at an angle, α and φ, respectively. The angles α and φ of outboard snubber shroud 52 and inboard snubber shroud 53, respectively, are designated with respect to platform 24 of the blade 16. The benefits of this snubber shroud arrangement are several, including an overall reduced tip mass as some of that mass is relocated closer to the axis of rotation, which reduces mechanical stress on the airfoil. Also, the angled snubber shroud configuration as embodied herein can provide a reduced or essentially turbulent free flow to the diffuser 14 by the outboard snubber shroud 52 and inboard snubber shroud 53 to reduce mechanical stress, shock (or balance any shock in the turbine engine 10), vibrations, all of which can decrease operational output and efficiency of the turbine engine 10. Therefore, the outboard snubber shroud 52 and an inboard snubber shroud 53 at angles, α and φ, respectively, can enhance efficiency of the turbine engine 10.

Additionally, the reduction in mechanical stress and blade vibration of the blade as a result of the angled snubber shroud configuration as embodied herein can enable smaller initial gap clearance between the blade at the tip 41 and its adjacent stationary structure 58 because the airfoil 25 should experience less elongation during operation. The reduced mechanical elongation pull on the blade 16 may also prolong blade life.

The angled inboard snubber shroud 53 may be configured as a circumferentially extending projection that protrudes from one or both of the pressure sidewall 55 and the suction sidewall 56 of the airfoil 25. Similarly, the angled outboard snubber shroud 52 may be configured as a circumferentially extending projection that protrudes from one or both of the pressure sidewall 55 and the suction sidewall 56 of the airfoil 25. As previously discussed, each of the angled snubber shrouds may be configured to engage an adjacent snubber shroud formed on one or both neighboring blades upon installation. It will be appreciated that the dual points of contact that the present embodiment may enable can advantageously limit the vibratory response of blades during operation.

The snubber shrouds as embodied by the disclosure are provided at angles with respect to platform 24. For example, angled outboard snubber shroud 52 is illustrated at angle α, in FIG. 2. Angle α is defined between platform 24 of the blade and a longitudinal axis that is the camber line of the angled outboard snubber shroud 52. The angle α is provided at a fixed geometry. The angle α is provided in a range from between about 0 degrees and about 17 degrees, for example between about 5 degrees and about 15 degrees, and perhaps between about 7 degrees and about 11 degrees. Preferably, the angle α is about 9 degrees for a well-balanced load on the angled outboard snubber shroud 52 as embodied herein.

Similarly, the angled inboard snubber shroud 53 is at angle φ, as illustrated in FIG. 2. The angle φ is provided at a fixed geometry. Angle φ is defined between platform 24 of the blade and a longitudinal axis that is the camber line of the angled inboard snubber shroud 53. The angle φ is provided in a range from between about 0 degrees and about 17 degrees, for example between about 3 degrees and about 14 degrees, and perhaps between about 5 degrees and about 10 degrees. Preferably the angle φ is about 7 degrees for a well-balanced load on the angled inboard snubber shroud 53.

Thus, angle α is not equal to angle φ, and angle α is greater than angle φ, if as above angle α = 9 degrees and angle φ =7 degrees.

The angled outboard snubber shroud 52 and the angled inboard snubber shroud 53 can be formed in a unitary configuration with the blade 16. For example, but in no way limiting of the instant embodiments, each of the angled outboard snubber shroud 52 and the angled inboard snubber shroud 53 can be cast with the blade 16 where the angled outboard snubber shroud 52 and the angled inboard snubber shroud 53 are fixed in desired angles. Of course, if desired, the angled outboard snubber shroud 52 and the angled inboard snubber shroud 53 can be formed separate from the blade 16 and then attached to the airfoil 25 to form a unitary configuration by means such as but not limited to welding, brazing, or other such attachment means, known now or hereinafter developed.

The angles of outboard snubber shroud 52 and inboard snubber shroud 53 are independently set with respect to each other. As used herein independent and independently set (used interchangeably) mean that the angled outboard snubber shroud 52 can have its angle α at one value and the angle φ of the angled inboard snubber shroud 53 can be at another value. The angles φ and α of the outboard snubber shroud 52 and the inboard snubber shroud 53 do not need to be the same, and in fact, may differ. The angles φ and α of the outboard snubber shroud 52 and the inboard snubber shroud 53 are set to balance loads on the airfoil 25, can be capable to reduce vibration, and mitigate shock in and on the airfoil 25.

The independent angles φ and α of the outboard snubber shroud 52 and the inboard snubber shroud 53 are also capable of regulating and smoothing flow around the airfoil 25, over the angled outboard snubber shroud 52 and the angled inboard snubber shroud 53. Thus, the flow downstream of the airfoil 25, which when equipped with the angled outboard snubber shroud 52 and the angled inboard snubber shroud 53 as embodied herein, may have a total pressure profile at the entry to the diffuser 14 in a turbine engine 10 to reduce loads, stress, vibrations and other potentially detrimental operations effects. The total pressure profile as a result of the airfoil 25 provided with the angled outboard snubber shroud 52 and the angled inboard snubber shroud 53 is capable of balancing shock above and below the angled outboard snubber shroud 52 and the angled inboard snubber shroud 53 and smoothing flow there past. The balancing of shock may also be capable of managing efficiency debit (also known as flow energy) due to the part span shroud providing smooth flow to the diffuser 14. This smooth flow is non-disruptive to the diffuser 14 and exhaust 15, thus preventing rough flow from degrading operational energies from the turbine engine 10. The part-span shroud configuration is also set to obtain a balance between turbine and downstream diffuser loss. The circumferential total pressure profile entering the diffuser is import to a turbine recovery factor. Angles of dual part-span shrouds can be used to configure the profile in addition to the blade throat setting. For example, increasing an upper angle can result in a stronger tip profile as more flow is directed there, whereas a lower part-span shroud angle can bias bottom portion of the blade's pressure profile. An optimum profile angle for performance balances a shock loss in the vicinity of shrouds and sets a desirable radial pressure profile in diffuser over a range of turbine operating conditions.

As indicated in Figure 2, the outboard snubber shroud 52 may be positioned near the outboard tip 41 of the airfoil 25, while the inboard snubber shroud 53 may be positioned near the radial mid-region of the airfoil 25. In an alternative embodiment, the outboard snubber shroud 52 is positioned just inside of the outboard tip 41 of the airfoil 25, and the inboard snubber shroud 53 is positioned at approximately the mid-point of the airfoil 25. In another embodiment, the radial positioning of the inboard and outboard snubber shrouds 52 is defined within a range of heights defined relative to the airfoil 25. In one such embodiment, the inboard snubber shroud 53 may be positioned within a range of radial heights defined between an inboard boundary at 25% of a radial height of the airfoil 25 and an outboard boundary at 75% of the radial height of the airfoil 25, and the outboard snubber shroud 52 may be positioned outside of an inboard boundary at 60% of the radial height of the airfoil 25. In an alternative embodiment, the inboard snubber shroud 53 may be positioned within a range of radial heights defined between an inboard boundary at 40% of a radial height of the airfoil 25 and an outboard boundary at 60% of the radial height of the airfoil 25, and the outboard snubber shroud 52 may be positioned within a range of radial heights defined between an inboard boundary at 75% of the radial height of the airfoil 25 and an outboard boundary that 95% of the radial height of the airfoil 25. In another preferred embodiment, the inboard snubber shroud 53 may be positioned within a range of radial heights defined between an inboard boundary at 40% of a radial height of the airfoil 25 and an outboard boundary at 60% of the radial height of the airfoil 25, and the outboard snubber shroud 52 may be positioned outside of an inboard boundary at 90% of the radial height of the airfoil 25.

It will be appreciated that, pursuant to the several embodiments discussed above, the present embodiments provides a manner by which the vibratory response of turbine blades may be reduced so to limit damaging vibrational mechanical loads while also allowing for improved aerodynamic/leakage preventing performance. That is, it will be understood that, according to the present embodiments, natural frequencies of the blade structure may be raised and harmful vibratory responses avoided, thereby enabling longer turbine blades, which, in turn, may be used to enable larger turbine engines having greater output and efficiency. Additionally, the reduced tip mass enabled by the present embodiments and resulting mechanical pull may allow for a tighter clearance between the blade and the surrounding stationary structure.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope of the invention as defined by the claims.

## Claims

1. A blade (16), the blade (16) comprising:
an airfoil (25) including a platform (24), a concave pressure sidewall (55) and a convex suction sidewall (56) extending axially between corresponding leading and trailing edges and radially between a root (21) and an outboard tip (41), the blade (16) further including:
an angled outboard snubber shroud (52) positioned on the airfoil (25), the angled outboard snubber shroud (52) being provided at an angle α defined from a camber on the angled outboard snubber shroud (52) and the platform (24) of the blade (16);
an angled inboard snubber shroud (53) positioned on the airfoil (25), the angled inboard snubber shroud (53) being provided at an angle φ defined from a camber on the angled inboard snubber shroud (53) and the platform (24) of the blade (16);
wherein angle α is independently set with respect to angle φ.

2. The blade (16) according to claim 1, wherein angle α is not equal to angle φ.

3. The blade (16) according to claim 1, wherein the angle α is greater than angle φ.

4. The blade (16) according to claim 1, wherein the angle α is provided in a range from between about 0 degrees and about 17 degrees.

5. The blade (16) according to claim 1, wherein the angle α is about 9 degrees.

6. The blade (16) according to claim 1, wherein the angle φ is provided in a range from between about 0 degrees and about 17 degrees.

7. The blade (16) according to claim 1, wherein the angle φ is about 7 degrees.

8. The blade (16) according to claim 1, wherein the angle α of the angled outboard snubber shroud (52) and the angle φ of the angled inboard snubber shroud (53) are fixed.

9. The blade (16) according to claim 1, wherein the angled inboard snubber shroud (53) comprises one disposed within a first range of radial heights defined on the airfoil (25), wherein the first range includes an inboard boundary at 25% of a radial height of the airfoil (25) and an outboard boundary at 75% of the radial height of the airfoil (25); and
wherein the angled outboard snubber shroud (52) comprises one disposed within a second range of radial heights defined on the airfoil (25), wherein the second range includes an inboard boundary at 60% of the radial height of the airfoil (25).

10. The blade (16) according to claim 9, wherein the inboard boundary of the first range comprises 40% of the radial height of the airfoil (25) and the outboard boundary of the first range comprises 60% of the radial height of the airfoil (25); and
wherein the inboard boundary of the second range comprises 75% of the radial height of the airfoil (25) and an outboard boundary of the second range comprises 95% of the radial height of the airfoil (25).

11. A turbine engine (10) having a turbine (13) that comprises a row of circumferentially spaced blades (16), said blades (16) according to any of claims 1-10.

12. The gas turbine engine (10) according to claim 11, wherein the angle α is about 9 degrees, and the angle φ is about 7 degrees.

## Patentansprüche

1. Schaufel (16), die Schaufel (16), umfassend:
ein Schaufelblatt (25), das eine Plattform (24), eine konkave Druckseitenwand (55) und eine konvexe Saugseitenwand (56) beinhaltet, die sich axial zwischen entsprechenden vorderen und hinteren Kanten und radial zwischen einer Wurzel (21) und einer außenliegenden Spitze (41) erstrecken, wobei die Schaufel (16) ferner beinhaltet:
eine abgewinkelte außenliegende Snubber-Ummantelung (52), die auf dem Schaufelblatt (25) positioniert ist, wobei die abgewinkelte außenliegende Snubber-Ummantelung (52) in einem Winkel α bereitgestellt ist, der aus einer Wölbung auf der abgewinkelten außenliegenden Snubber-Ummantelung (52) und der Plattform (24) der Schaufel (16) definiert ist;
eine abgewinkelte innenliegende Snubber-Ummantelung (53), die auf dem Schaufelblatt (25) positioniert ist, wobei die abgewinkelte innenliegende Snubber-Ummantelung (53) in einem Winkel φ bereitgestellt ist, der aus einer Wölbung auf der abgewinkelten innenliegenden Snubber-Ummantelung (53) und der Plattform (24) der Schaufel (16) definiert ist;
wobei der Winkel α unabhängig hinsichtlich des Winkels φ eingestellt ist.

2. Schaufel (16) nach Anspruch 1, wobei der Winkel α nicht gleich dem Winkel φ ist.

3. Schaufel (16) nach Anspruch 1, wobei der Winkel α über dem Winkel φ liegt.

4. Schaufel (16) nach Anspruch 1, wobei der Winkel α in einem Bereich von zwischen etwa 0 Grad und etwa 17 Grad liegt.

5. Schaufel (16) gemäß Anspruch 1, wobei der Winkel α etwa 9 Grad beträgt.

6. Schaufel (16) nach Anspruch 1, wobei der Winkel φ in einem Bereich von zwischen etwa 0 Grad und etwa 17 Grad liegt.

7. Schaufel (16) gemäß Anspruch 1, wobei der Winkel φ etwa 7 Grad beträgt.

8. Schaufel (16) nach Anspruch 1, wobei der Winkel α der abgewinkelten außenliegenden Snubber-Ummantelung (52) und der Winkel φ der abgewinkelten innenliegenden Snubber-Ummantelung (53) fest sind.

9. Schaufel (16) nach Anspruch 1, wobei die abgewinkelte innenliegende Snubber-Ummantelung (53) eine umfasst, die innerhalb eines ersten Bereichs von radialen Höhen angeordnet ist, die auf dem Schaufelblatt (25) definiert sind, wobei der erste Bereich eine innenliegende Begrenzung bei 25 % einer radialen Höhe des Schaufelblatts (25) und eine außenliegende Begrenzung bei 75 % der radialen Höhe des Schaufelblatts (25) beinhaltet; und
wobei die abgewinkelte außenliegende Snubber-Ummantelung (52) eine umfasst, die innerhalb eines zweiten Bereichs von radialen Höhen angeordnet ist, die auf dem Schaufelblatt (25) definiert sind, wobei der zweite Bereich eine innenliegende Begrenzung bei 60 % der radialen Höhe des Schaufelblatts (25) beinhaltet.

10. Schaufel (16) nach Anspruch 9, wobei die innenliegende Begrenzung des ersten Bereichs 40 % der radialen Höhe des Schaufelblatts (25) umfasst und die außenliegende Begrenzung des ersten Bereichs 60 % der radialen Höhe des Schaufelblatts (25) umfasst; und
wobei die innenliegende Begrenzung des zweiten Bereichs 75 % der radialen Höhe des Schaufelblatts (25) umfasst und eine außenliegende Begrenzung des zweiten Bereichs 95 % der radialen Höhe des Schaufelblatts (25) umfasst.

11. Turbinentriebwerk (10), das eine Turbine (13) aufweist, die eine Reihe von in Umfangsrichtung beabstandeten Schaufeln (16) umfasst, wobei die Schaufeln (16) nach einem der Ansprüche 1 bis 10 vorliegen.

12. Gasturbinentriebwerk (10) nach Anspruch 11, wobei der Winkel α etwa 9 Grad beträgt und der Winkel φ etwa 7 Grad beträgt.

## Revendications

1. Aube (16), l'aube (16) comprenant :
un profil aérodynamique (25) comportant une plate-forme (24), une paroi latérale de pression concave (55) et une paroi latérale d'aspiration convexe (56) s'étendant axialement entre des bords d'attaque et de fuite correspondants et radialement entre une emplanture (21) et une pointe extérieure (41), l'aube (16) comportant en outre :
une enveloppe d'amortisseur extérieure inclinée (52) positionnée sur le profil aérodynamique (25), l'enveloppe d'amortisseur extérieure inclinée (52) étant prévue à un angle α défini en partant d'une cambrure sur l'enveloppe d'amortisseur extérieure inclinée (52) et la plate-forme (24) de l'aube (16) ;
une enveloppe d'amortisseur intérieure inclinée (53) positionnée sur le profil aérodynamique (25), l'enveloppe d'amortisseur intérieure inclinée (53) étant prévue à un angle φ défini en partant d'une cambrure sur l'enveloppe d'amortisseur intérieure inclinée (53) et la plate-forme (24) de l'aube (16) ;
dans laquelle l'angle α est indépendamment défini par rapport à l'angle φ.

2. Aube (16) selon la revendication 1, dans laquelle l'angle α n'est pas égal à l'angle φ.

3. Aube (16) selon la revendication 1, dans laquelle l'angle α est supérieur à l'angle φ.

4. Aube (16) selon la revendication 1, dans laquelle l'angle α est fourni dans une plage entre environ 0 degré et environ 17 degrés.

5. Aube (16) selon la revendication 1, dans laquelle l'angle α est d'environ 9 degrés.

6. Aube (16) selon la revendication 1, dans laquelle l'angle φ est fourni dans une plage entre environ 0 degré et environ 17 degrés.

7. Aube (16) selon la revendication 1, dans laquelle l'angle φ est d'environ 7 degrés.

8. Aube (16) selon la revendication 1, dans laquelle l'angle α de l'enveloppe d'amortisseur extérieure inclinée (52) et l'angle φ de l'enveloppe d'amortisseur intérieure inclinée (53) sont fixés.

9. Aube (16) selon la revendication 1, dans laquelle l'enveloppe d'amortisseur intérieure inclinée (53) est disposée dans une première plage de hauteurs radiales définies sur le profil aérodynamique (25), dans laquelle la première plage comporte une limite intérieure à 25 % d'une hauteur radiale du profil aérodynamique (25) et une limite extérieure à 75 % de la hauteur radiale du profil aérodynamique (25) ; et
dans laquelle l'enveloppe d'amortisseur extérieure inclinée (52) est disposée dans une seconde plage de hauteurs radiales définies sur le profil aérodynamique (25), dans laquelle la seconde plage comporte une limite intérieure à 60 % de la hauteur radiale du profil aérodynamique (25).

10. Aube (16) selon la revendication 9, dans laquelle la limite intérieure de la première plage comprend 40 % de la hauteur radiale du profil aérodynamique (25) et la limite extérieure de la première plage comprend 60 % de la hauteur radiale du profil aérodynamique (25) ; et
dans laquelle la limite intérieure de la seconde plage comprend 75 % de la hauteur radiale du profil aérodynamique (25) et une limite extérieure de la seconde plage comprend 95 % de la hauteur radiale du profil aérodynamique (25).

11. Moteur à turbine (10) ayant une turbine (13) qui comprend une rangée d'aubes espacées de manière circonférentielle (16), lesdites aubes (16) selon l'une quelconque des revendications 1 à 10.

12. Moteur à turbine à gaz (10) selon la revendication 11, dans lequel l'angle α est d'environ 9 degrés, et l'angle φ est d'environ 7 degrés.
